(19) Europäisches Patentamt
European Patent Office
Office européen des brevets

(11) Veröffentlichungsnummer: **0 012 379**
**B1**

(12) # EUROPÄISCHE PATENTSCHRIFT

(45) Veröffentlichungstag der Patentschrift: **01.06.83**

(51) Int. Cl.³: **C 09 D 3/48, H 01 B 3/30**

(21) Anmeldenummer: **79104975.2**

(22) Anmeldetag: **06.12.79**

(54) **Lackmischung und Beschichtungsmittel enthaltend Polyamidhydantione.**

(30) Priorität: **16.12.78 DE 2854412**

(43) Veröffentlichungstag der Anmeldung:
**25.06.80 Patentblatt 80/13**

(45) Bekanntmachung des Hinweises auf die Patenterteilung:
**01.06.83 Patentblatt 83/22**

(84) Benannte Vertragsstaaten:
**AT DE FR GB IT**

(56) Entgegenhaltungen:
**FR - A - 1 575 421**
**FR - A - 2 038 701**
**FR - A - 2 147 155**

**CHEMICAL ABSTRACTS, Vol. 80, Nr. 24, 17. Juni 1974, Seite 16, Nr. 134041z Columbus, Ohio, U.S.A.**

**Die Akte enthält technische Angaben, die nach dem Eingang der Anmeldung eingereicht wurden und die nicht in dieser Patentschrift enthalten sind.**

(73) Patentinhaber: **BAYER AG**
**Zentralbereich Patente, Marken und Lizenzen**
**D-5090 Leverkusen 1, Bayerwerk (DE)**

(72) Erfinder: **Dünwald, Willi, Dr.**
**Geschwister-Scholl-Strasse 16**
**D-5090 Leverkusen 1 (DE)**
Erfinder: **Lewalter, Jürgen, Dr.**
**Bergstrasse 88**
**D-5068 Odenthal (DE)**
Erfinder: **Merten, Rudolf, Dr.**
**Berta-von-Suttner-Strasse 55**
**D-5090 Leverkusen 1 (DE)**
Erfinder: **Rottmaier, Ludwig, Ing.-grad.**
**Bergstrasse 85**
**D-5068 Odenthal (DE)**
Erfinder: **Schulte, Bernhard, Dr.**
**Südwall 80A**
**D-4150 Krefeld (DE)**
Erfinder: **Meyer, Karl-Heinrich, Dr.**
**Deswatinesstrasse 89**
**D-4150 Krefeld (DE)**

(56) Entgegenhaltungen:
**CHEMICAL ABSTRACTS, Vol. 77, Nr. 2, 10. Juli 1972, Seite 133, Nr. 7458d Columbus, Ohio, U.S.A.**

**EP 0 012 379 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Lackmischung und Beschichtungsmittel enthaltend Polyamidhydantoine

Für die Herstellung von Überzügen und Filmen ist eine Vielzahl von Rohstoffen und Rohstoffkombinationen bekannt. Sie müssen hinsichtlich der Verarbeitungstechnik und Beanspruchung im praktischen Einsatz mannigfaltigen Anforderungen gerecht werden. Bei der Verwendung auf dem Gebiet der Elektroisoliertechnik kommen noch ein gutes elektrisches Isoliervermögen sowie in zunehmendem Maße gute Beständigkeit gegen Wärme- und Hitzebeanspruchung hinzu.

Der erste Schritt im Hinblick auf eine verbesserte Wärmebeständigkeit wurde mit den Terephthalsäurepolyestern getan, wie sie im BE—Patent 557 685 beschrieben werden.

Eine weitere Verbesserung stellte den Einbau von Isocyanuratstrukturen dar. So enthält der durch Kombination von Hydroxylgruppen aufweisenden Polymeren der Tere- und/oder Iso- und/oder Aminoisophthalsäure mit Isocyanuratopolyisocyanaten auf dem Substrat erzeugte Überzug je nach dem Mischungsverhältnis die auf den Verwendungszweck abgestellten Mengen von Isocyanurat-Strukturen (DAS 1 179 319).

Neben der Verwendung des Isocyanuratopolyisocyanates ist der Einbau von Isocyanuratstrukturen auch durch die Mitverwendung von Cyanursäurearylestern möglich (DAS 1 096 031).

Weitere Verbesserungen werden erzielt, wenn neben den erwähnten Dicarbonsäuren auch Tricarbonsäuren wie beispielsweise die Isomeren 1, 2, 3 und/oder 1, 2, 4 und/oder 1, 3, 5 Benzoltricarbonsäuren zusammen mit Diaminen und Polyolen verwendet werden (DAS 1 067 549), so daß der eingebrannte Lackfilm in seinem Gefüge neben den Estergruppen noch Isocyanurat-, Amid- und Imidgruppierungen enthält.

Für die Herstellung von Lösungen dieser Polymeren sind nur sehr wenige und für die allgemeine Lackanwendung unübliche Lösemittel geeignet.

So sind z.B. Polyamide, Tere- bzw. Isophthalsäurepolyester mit und ohne Imidgruppierungen nur in Phenolischen Lösungsmitteln löslich, wenn sie die für die Erzielung optimaler Filmeigenschaften erforderlichen hohen Molekulargewichte aufweisen.

Polyamid-Imide und Polyimide sind üblicherweise nur in stickstoffhaltigen Flüssigkeiten wie N-Methylpyrrolidon, Dimethylformamid, Diäthylformamid und ähnlichen löslich. Diese Stoffe sind physiologisch ebenfalls nicht unbedenklich und führen, wenn sie nach dem Einbrennprozeß zum Zwecke der Energiegewinnung bzw. der Erniedrigung der Emissionen verbrannt werden, u.a. zu Stickoxiden.

Für die Stoffklasse der Polyhydantoine — soweit sie im Gebiet der Isolierlacke Verwendung gefunden haben — galt es deshalb als besonderer Vorteil, daß sie derartiger stickstoffhaltiger Lösemittel nicht bedürfen, sondern mit den in der Drahtlackindustrie akzeptierten phenolischen Lösungsmitteln auskommen, in denen sie auch vorteilhafterweise hergestellt werden. Physiologische Bedenken und zu starke Umweltbelastungen sprechen aber gegen einen Einsatz dieser Lösungsmittel.

Ein weiterer Mangel der bisher bekannten Lösemittel ist, daß nur wenige Substrate, die eine ausreichende Resistenz gegen diese starken Lösemittel aufweisen, mit derartigen Bindemittelfilmen überzogen werden können.

Die Löslichkeitsunterschiede der Polyamidimide und Polyimide einerseits sowie der Polyamide, Polyester, Polyesterimide und Polyhydantoine andererseits machten es unmöglich, durch Mischen der jeweiligen reinen Polymerlösungen miteinander zu Lösungsmischungen zu kommen, die zu optimalen Eigenschaften des resultierenden Lackfilmes führen. Optimale Filmeigenschaften erfordern ein Abstimmen der für die einzelnen Eigenschaften spezifischen Strukturen in gewissen Mengenverhältnissen. Diese Mengenverhältnisse kann man nicht beliebig wählen. Zwischen den basischen Stickstoffhaltigen Lösemitteln und Phenol bzw. Kresol und Homologen kommt es zur Wechselwirking unter Änderung der Lösefähigkeit, was zu Ausfällungen führt, von denen die einzelnen Polymerkomponenten in unterschiedlichem Umfang betroffen werden. Der in Lösung verbleibende Teil des Polymeren liegt dann nicht mehr im beabsichtigten Mengenverhältnis vor, vorausgesetzt, daß überhaupt ausreichende Mengen der Substanzen in Lösungen verbleiben.

Dabei ist es aber für eine gezielte Steuerung der Eigenschaften des resultierenden Filmes unerläßlich, die für bestimmte Eigenschaften des zu erzeugenden Lackfilms als wesentlich erkannten Structuren in wählbaren Verhältnissen aufeinander abstimmen zu können.

Wichtig für die Filmeigenschaft ist generell, daß ein guter Kontakt der Lacklösung zum Substrat besteht, was sich im guten Verlauf beim Lackierprozeß sowie anschließend in guter Haftung des ausgehärteten Lackfilmes äußert. Diese Effekt wird durch den Polyhydantoin-Zusatz bewirkt. Polyhydantoine erbringen weiterhin eine gute Hydrolysenfestigkeit und Temperaturbeständigkeit, die in der Fachsprache mit dem Terminus "burnout resistance" bezeichnet wird. Außerdem wird die Flexibilität günstig beeinflußt.

Der Einbau von Imidogruppen bringt eine Verbesserung der Hitzeschockfestigkeit und einen späteren Anstieg im Kurvenverlauf der Funktion tan $\delta$ in Abhängigkeit von der Temperatur.

Die Amid-Imid-Gruppierungen heben generell die Wärmedauerbeständigkeit an und verbessern das Gleitverhalten der lackierten Drähte.

Durch Einbau von Isocyanuratstrukturen läßt sich Härte, Lösungsmittelfestigkeit und thermoplastisches Verhalten steuern.

In der DOS 2 522 386 wird die Herstellung von Polyesterimiden in phenol-kresolfreien Lösemitteln beschrieben. Es ist aber nicht möglich, diese Lacklösungen mit einer für den gewünschten Effekt ausreichenden Menge Polyhydantoin zu kombinieren, weil die Polyhydantoine in den verwendeten Lösemitteln nicht löslich sind. Gleiches gilt für Polyamidimide un Polyimide.

Überraschenderweise wurde nun gefunden, daß es möglich ist, Polymere aufzubauen, welche neben Hydantoingruppen alle für einen temperaturbeständigen Überzug bzw. Film als wesentich erkannten Strukturen im Molekülaufbau enthalten, dabei aber nicht nur in stickstoffhaltigen Lösemitteln, wie N-methylpyrrolidon, Dimethylformamid sowie in Phenol, Kresol und Homologen, sondern in einem weiten Spektrum physiologisch günstiger beurteilter Lösungsmittel löslich sind, wenn man polyfunktionelle Aminocarbonsäurederivate mit organischen Polyisocyanaten in Gegenwart saurer Gruppen, vorzugsweise Carboxylgruppen umsetzt.

Gegenstand der vorliegenden Erfindung sind daher Beschichtungs mittel, enthaltend Polymere, die über (Thio)Hydantoinringe und Amidgruppen und gegebenenfalls Ester- und/oder Imid- und/oder Isocyanuratgruppen verknüpft sind und durch Umsetzung von polyfunktionellen Aminocarbonsäurederivaten mit organischen gegebenenfalls maskierten Polyisothiocyanaten in Gegenwart von Carboxylgruppen-haltigen Verbindungen und gegebenenfalls Polyhydroxyverbindungen und/oder cyclischen Anhydridverbindungen, und/oder Isocyanuratopolyisocyanaten, in nicht phenolischen Lösungsmitteln hergestellt wurden, wobei als nicht phenolische Lösungsmittel — Butyrolacton, Acetophenon, Benzoesäure methyl — oder — ethylester, Benzylalkohol oder deren Gemische verwendet worden sind.

Zur Herstellung der erfindungsgemäß zu verwendenden Polymeren werden vorzugsweise polyfunktionelle, bevorzugt difunktionelle $\alpha$-Aminocarbonsäurederivate der allgemeinen Formel (I)

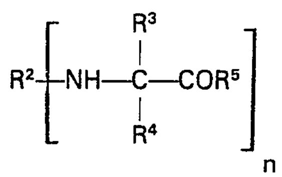

(I) verwendet,

worin $R^2$ für einen gegebenenfalls mit Halogen, Alkyl- mit $C_1$—$C_{10}$ und/oder Arylgruppen mit $C_6$—$C_{12}$substituierten Alkylrest mit 2—20 C-Atomen, einen Arylrest mit 5—12 C-Atomen, einen Cycloalkylrest mit 5—12 C-Atomen, einen Alkyl-Arylrest mit 6—20 C-Atomen und einen Heteroatome wie N und/oder O und/oder S im Ring enthaltenden Aryl- oder Cycloalkylrest mit 5—12 Ring C-Atomen steht, $R^3$ und $R^4$ gleich oder verschieden, Wasserstoff, einen Alkylrest mit $C_1$—$C_{20}$, einen Arylrest mit $C_6$—$C_{12}$ oder einen Aralkylrest mit $C_1$—$C_{20}$, $R^5$ eine Hydroxylgruppe, eine Aminogruppe, eine $C_1$—$C_{20}$ Alkylamino-, $C_1$—$C_{20}$ Dialkylamino-, $C_1$—$C_{20}$ Alkoxy- oder $C_5$—$C_{12}$ Aroxygruppe und n eine ganze Zahl von 2 bis 4, vorzugsweise 2 bedeuten. Sie sind aus der US-Patentschrift 3 397 253 bekannt.

Aromatische Reste für $R^2$ sind bevorzugt insbesondere die von Benzol, Azobenzol, Naphthalin, Anthracen, Diphenyl, Triphenylmethan, Diphenylmethan und Diphenyläther. Diese Reste können auch ein- oder mehrfach substituiert sein, beispielsweise durch $C_1$—$C_{20}$ Alkyl-, (Methyl-), Halogen- (Chlor-), Nitro-, $C_1$—$C_{20}$ Alkoxy- (Methoxy-), $C_1$—$C_{20}$ Dialkylamino- (Dimethylamino-), Acyl- (Acetyl-), $C_2$—$C_{17}$ Carbalkoxy- (Carbometh- oder -äthoxy-) und Cyanogruppen. Bevorzugt sind die gegebenenfalls ein- oder zweifach durch Methyl und/oder Chlor oder ein- oder zweifach mit Carboxylgruppen substituierten Reste, insbesondere von Benzol, Naphthalin, Diphenylmethan, oder Diphenyläther.

Die Reste $R^3$ und $R^4$ können auch als Glieder eines cyclischen $C_2$—$C_{20}$-Alkylrestes miteinander verknüpft sein, sowie durch Halogen (Chlor, Brom), Cyan, Hydroxycarbonyl, Aminocarbonyl, Alkoxycarbonyl oder Aroxycarbonyl substituiert sein.

Die Herstellung der erfindungsgemäß als Ausgangsverbindungen zu verwendenden $\alpha$-Aminocarbonsäurederivate ist im Prinzip bekannt und kann z.B. durch Umsetzung von aromatischen Aminen oder Aminocarbonsäuren mit Halogenessigsäure oder ihren Derivaten oder auch durch Kondensation mit Blausäure und Aldehyden oder Ketonen unter nachfolgender Umwandlung der Nitrilgruppe in z.B. Carbonsäure, Ester oder Amid erfolgen.

Die sauren Gruppen werden vorzugsweise in Form von Verbindungen mit wenigstens einer Carboxylgruppe im Molekül in die Reaktionsmischung eingebracht. Besonders hochwertige Hydantoinverbindungen werden erhalten, wenn die Carboxylgruppen-haltige Verbindung mindestens bisfunktionell ist, d.h. neben der Carboxylgruppe noch eine weitere funktionelle Gruppe wie z.B. eine Carboxyl-, Carbonsäureester-, cycl. Anhydrid-, Hydroxy-, Amino- oder glycinderivatgruppe enthält. Vorzugsweise sind es Verbindungen der allgemeinen Formel (II)

$$(X)_z—R^1—COOH \qquad (II),$$

in der

$R^1$ für einen z + 1-wertigen, gegebenenfalls substituierten aliphatischen, vorzugsweise mit $C_1$—$C_{20}$; cycloaliphatischen, vorzugsweise mit $C_5$—$C_{12}$; aliphatisch-aromatischen, vorzugsweise mit $C_6$—$C_{20}$; oder aromatischen, vorzugsweise mit $C_5$—$C_{12}$; Rest oder einen Heteroatome wie N und/oder

O und/oder S im Ring enthaltenden Aryl- oder Cycloalkylrest mit 5—12 C-Atomen,

z für eine ganze Zahl von 1 bis 4, vorzugsweise 1, und

X für eine Carboxyl-, Glycinsäurederivat-, Hydroxy-, Amino, Carboxylester- oder cyclische Anhydridgruppe steht.

Besonders bevorzugt werden daher als saure Koreaktanten Polycarbonsäure, besonders bevorzugt Dicarbonsäuren eingesetzt.

Derartige Polycarbonsäuren können beispielsweise sein:

Oxalsäure, Malonsäure, Bernsteinsäure, Glutarsäure, Adipin-, Trimethyladipinsäure, Fumarsäure, Maleinsäure, Hexahydroterephthalsäure, Phthalsäure, Isophthalsäure, Terephthalsäure, Benzol-1,3,5-tricarbonsäure, Benzol-1,2,4-tricarbonsäure, Benzol-1,2,3-tricarbonsäure, Naphthalin-1,5-dicarbonsäure, Benzophenon-4,4'-dicarbonsäure, Diphenylsulfon-4,4'-dicarbonsäure, Butantetracarbonsäure, Tricarballylsäure, Ethylentetracarbonsäure, Pyromellithsäure, benzol-1,2,3,4-tetracarbonsäure, Benzol-1,2,3,5-tetracarbonsäure, Benzol-1,2,4,5-tetracarbonsäure, Naphthalin-1,4,5,8-tetracarbonsäure sowie

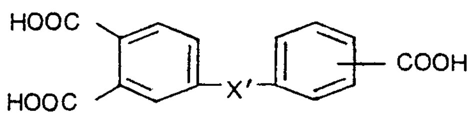

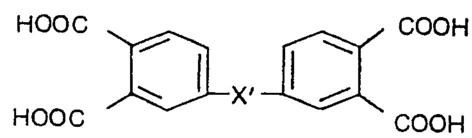

mit X' = 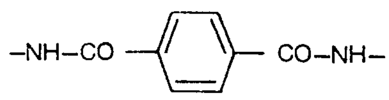 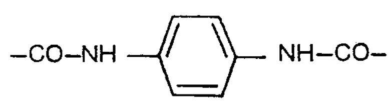

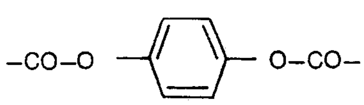 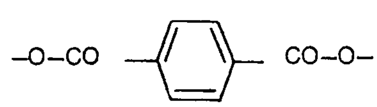

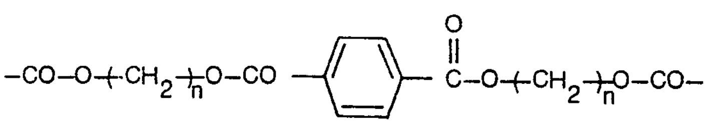 n = 2—6

—CO—O—$(CH_2)_n$—O—CO—, —O—, —S—, —$SO_2$—, —CO—, —$CH_2$—$CH_2$—

—N=N—, —$CH_2$—, $CH_3$—C—$CH_3$

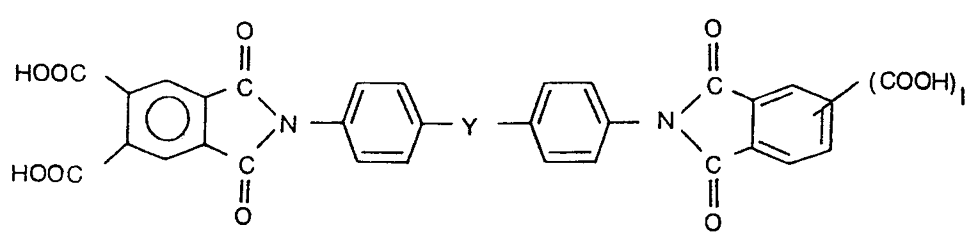

mit Y = —O—, —S—, —$SO_2$—, —CO—, —N=N—, —$CH_2$—$CH_2$— —$CH_2$—,

$CH_3$—C—$CH_3$ und l 1 oder 2

Die Polycarbonsäuren können, soweit strukturell möglich, auch partiell oder vollständig als cyclische Anhydridverbindungen eingesetzt werden, wenn im Zuge der erfindungsgemäßen Reaktion saure Gruppen entstehen können. Derartige Verbindungen können beispielsweise sein:

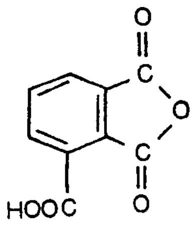 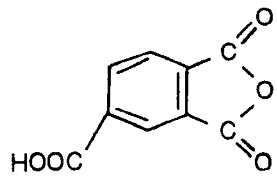 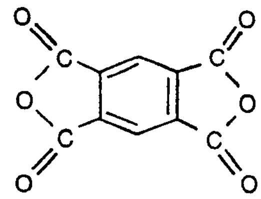 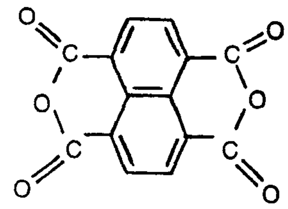

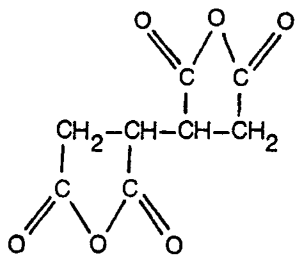 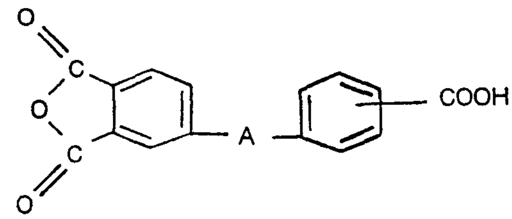

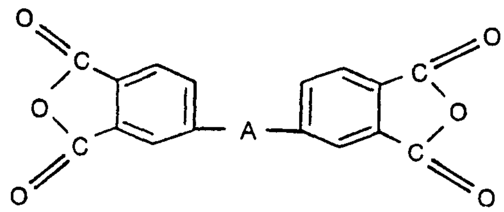

A = 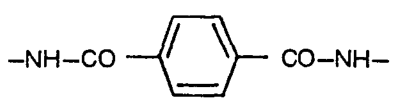 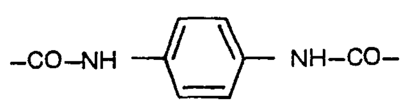

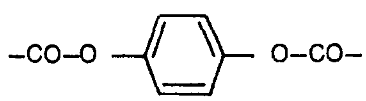 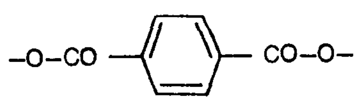

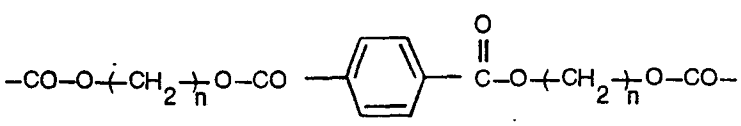 n = 2—6

$—CO—O—(CH_2)_n—O—CO—$, $—O—$, $—S—$, $—SO_2—$, $—CO—$, $—CH_2—CH_2—$

$—N{=}N—$, $—CH_2—$, $CH_3—\overset{|}{\underset{|}{C}}—CH_3$

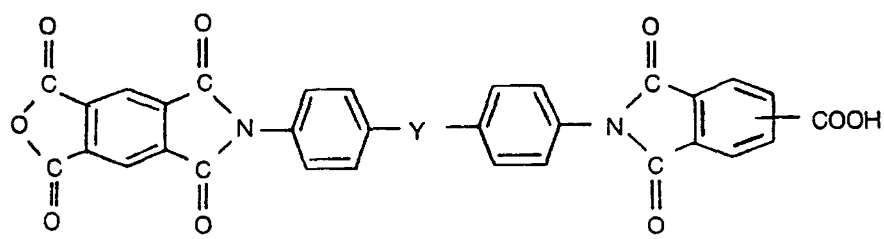

Y = $—O—$, $—S—$, $—SO_2—$, $—CO—$, $—N{=}N—$, $—CH_2—CH_2—$ $—CH_2—$,

$CH_3—\overset{|}{\underset{|}{C}}—CH_3$

Die Polycarbonsäuren können auch oligomerer oder polymerer Natur sein. So können hier beispielsweise auch Bisbenzoldicarbonsäuren der Strukturformel

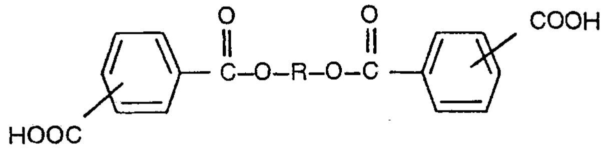

eingesetzt werden.

R bedeutet darin einen mindestens zweiwertigen aromatischen Rest mit $C_5$—$C_{12}$, einen gesättigten oder ungesättigten aliphatischen mit $C_2$—$C_{20}$, cycloaliphatischen mit $C_5$—$C_{12}$ Rest, in dem aromatische, cycloaliphatische oder heterocyclische Ringsysteme sowie Ether-, Keto-, Ester-, oder Sulfonbrücken enthalten sein können, und der gegebenenfalls durch Halogene, Nitro- oder Alkoxygruppen mit $C_1$—$C_{20}$ substituiert sein kann.

Mögliche Beispiele für R sind:

$-(CH_2)_2-$, $-(CH_2)_6-$, 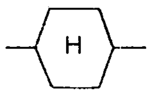 , 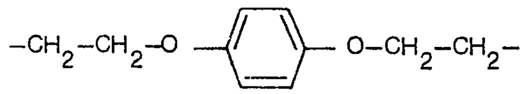

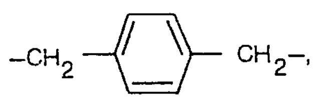 $-(CH_2)_2-O-(CH_2)_2-$, 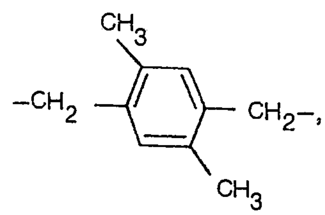

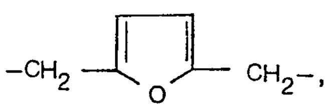 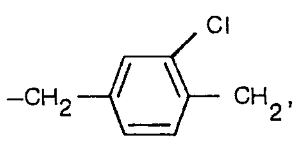 $-CH_2-CH=CH-CH_2-$

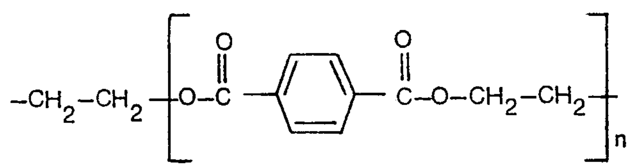 usw.

n = 1—7

Darüber hinaus können aber auch oligomere und/oder polymere saure Carbonsäureester der Strukturformel

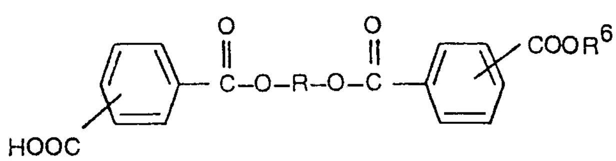

eingesetzt werden, worin R die oben bereits angeführte Bedeutung hat und $R^6$ ein gegebenenfalls substituierter aliphatischer mit $C_1$—$C_{20}$, aliphatischaromatischer mit $C_6$—$C_{20}$ oder aromatischer Rest mit $C_5$—$C_{12}$ bedeuten. Als Substituenten kommen in Frage: Halogene, Nitro-, Cyano-, Hydroxyl-, Alkoxygruppen mit $C_1$—$C_{10}$ oder Aroxygruppen mit $C_5$—$C_{12}$.

Die sauren Gruppen können ferner in Form von Verbindungen eingesetzt werden, die neben mindestens einer Carboxylgruppe eine $\alpha$-Aminosäurederivat-Gruppe enthalten. Vorzugsweise sind es solche der Allgemeinen Formel

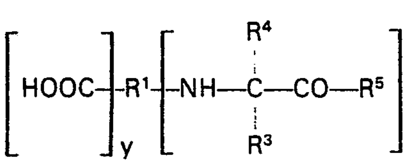 X'',

in der $R^1$, $R^3$, $R^4$ und $R^5$ die bereits oben definierte Bedeutung haben und y und x'' unabhängig voneinander eine ganze Zahl von 1—3, vorzugsweise 1 und/oder 2 sein können. Diese Verbindungen sind zumindest teilweise auch an der Hydantoinringbildung beteiligt.

Die Herstellung dieser Verbindungen ist im Prinzip bekannt und kann gemäß US-Pat. 3 397 253 aus den entsprechenden $\alpha$-Aminocarbonsäuren erfolgen. Hierzu können beispielsweise 2-, 3- und 4-Aminobenzoesäure, 4-Chlor-3-aminobenzoesäure, 2- oder 4- oder 5-Aminoisophthalsäure, 1-Amino-anthrachinon-2-carbonsäure, 4-Aminoanthrachinon-1-carbonsäure, 4-Aminonaphthalin-1,8-dicarbonsäure, 2,4- und 3,4-Diaminobenzoesäure, Aminoessigsäure, Aminocapronsäure usw. verwendet werden, die im übrigen auch direkt für das erfindungsgemäße Verfahren eingesetzt werden können.

Als saure Gruppen tragende Verbindungen sind auch Hydroxycarbonsäuren der allgemeinen Formel

$$[HOOC\!-\!]_y R^1 \!-\![OH]_k$$

geeignet, in der $R^1$ die oben aufgeführten Bedeutungen hat und y sowie k unabhängig voneinander eine ganze Zahl von 1—3, vorzugsweise 1 und/oder 2, sein können.

Als Beispiele derartiger Verbindungen seien Hydroxycarbonsäuren wie Glykolsäure, Milchsäure, Mandelsäure, Zitronensäure, Weinsäure, 2- oder 3- oder 4-Hydroxybenzoesäuren, sowie Hydroxybenzoldicarbonsäuren angeführt.

Die ganz besonders bevorzugt eingesetzten carboxylgruppenhaltigen Verbindungen sind Isophthalsäure und/oder Trimellithsäure und/oder Trimellithsäureanhydrid und/oder Terephthalsäure, sowie die isomeren, Carboxylgruppen enthaltenden Anilinoisobuttersäurederivate bzw. die entsprechenden Oligoester dieser Säuren mit untergeordneten Mengen Ethylenglykol, Propylenglykol, Glycerin, Trimethylolpropan und/oder Trishydroxyethylisocyanurat.

Als Polyhydroxyverbindungen werden bevorzugt aliphatische Polyole mit $C_2$—$C_{20}$ eingesetzt. Besonders bevorzugt werden Diole wie Ethylenglykol, Dipropylenglykol, Butandiol 1,4; Hexandiol 1,6-Dimethylolpropan, Neopentylglykol, Bishydroxyethylhydantoin und/oder Triole wie Glycerin, Trimethylolpropan, Trishydroxyalkylisocyanurat in Substanz oder in Form der dies bildenden Komponenten wie Cyanursäuretriarylester und/oder Polyolen sowie Tetrolen wie Pentaerythrit verwendet.

Als erfindungsgemäß einzusetzende Ausgangskomponenten kommen aliphatische, cycloaliphatische, araliphatische, aromatische und heterocyclische Polyisocyanate in Betracht (vgl. Annalen 562, Seiten 75 bis 136), beispielsweise Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanato-methyl-cyclohexan (DAS 1 202 785), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4''-triisocyanat, Polyphenylpolymethylen-polyisocyanate, wie sie durch Anilin-Formaldehyd-Kondensation und anschließende Phosgenierung erhalten und z.B. in den britischen Patentschriften 874 430 und 848 671 beschrieben werden, perchlorierte Arylpolyisocyanate, wie sie z.B. in der deutschen Auslegeschrift 1 157 601 beschrieben werden, Carbodiimidgruppen aufweisende Polyisocyanate, wie sie in der deutschen Patentschrift 1 092 007 beschrieben werden, Diisocyanate, wie sie in der US—Patentschrift 3 492 330 beschrieben werden, Allophanatgruppen aufweisende Polyisocyanate, wie sie z.B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z.B. in den deutschen Patentschriften 1 022 789, 1 222 067 und 1 027 394 sowie in den deutschen Offenlegungsschriften 1 929 034 und 2 004 048 beschrieben werden.

Als Isocyanuratopolyisocyanate werden vorzugsweise Verbindungen der allgemeinen Formel

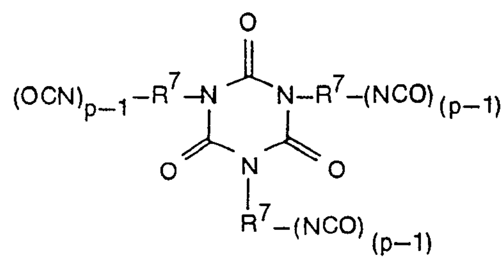

eingesetzt, wobei $R^7$ der noch zu definierende organische Rest der Isocyanatverbindung und p eine ganze Zahl von 1—4 sein sollen. Solche Verbindungen können beispielsweise auch gemäß DAS 1 035 362 separat oder in situ aus entsprechenden organischen Isocyanaten hergestellt werden.

Ferner Urethangruppen aufweisende Polyisocyanate, wie sie z.B. in der belgischen Patentschrift 752 261 oder in der US-Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z.B. in der deutschen Patentschrift 1 101 394, in der britischen Patentschrift 889 050 und in der französischen Patentschrift 1 017 514 beschrieben werden, durch Telomerisationsreaktionen hergestellte Polyisocyanate wie sie z.B. in der belgischen Patentschrift 723 640 beschrieben werden, Estergruppen aufweisende Polyisocyanate, wie sie z.B. in den britischen Patentschriften 956 474 und 1 072 956, in der US-Patentschrift 3 567 763 und in der deutschen Patentschrift 1 231 688 genannt werden, Umsetzungsprodukte der obengenannten Isocyanate mit Acetalen gemäß der deutschen Patentschrift 1 072 358.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Als Monoisocyanate können neben den Polyisocyanaten in untergeordneten Mengen im Sinne der Erfindung aliphatische, cycloaliphatische, aliphatisch-aromatische und aromatische, gegebenenfalls durch Heteroatome substituierte Verbindungen mit einer NCO-Gruppe im Molekül eingesetzt werden, so beispielsweise Alkylisocyanate wie Ethyl-, Methyl-, Butyl-, Dodecyl- und Stearylisocyanat, aromatische, gegebenenfalls substituierte Monoisocyanate wie Phenyl-, Tolyl-, Isopropyl-, Nonylisocyanat, Nitro-, Alkoxy, Aroxy-, Chlor-, Dichlor-, Trichlor-, Tetrachlor-, Pentachlor-, Benzyl-, Bromphenyl-isocyanat oder Isocyanatobenzoesäureester, -phthalsäureester, -isophthalsäureester, Isocyanatobenzonitrol, cycloaliphatische Isocyanate wie Cyclohexylisocyanat und ungesättigte Isocyanate wie Allyl-, Oleyl-, Cyclohexenylisocyanat.

Vorzugsweise eignen sich Isocyanate der allgemeinen Formel (III)

$$R^7—(NCO)_p \qquad (III)$$

in denen $R^7$ für einen, gegebenenfalls mit Halogen, Alkyl- mit $C_1$—$C_{10}$ und/oder Arylgruppen mit $C_5$—$C_{12}$ substituierten Alkylrest mit 2—20 C-Atomen, einen Arylrest mit 5—12 C-Atomen, einen Cycloalkylrest mit 5 bis 12 C-Atomen, einen Alkyl-Arylrest mit 6—20 C-Atomen und einen Heteroatome wie N, O oder S enthaltenden Aryl- oder Cycloalkylrest mit 5—12 C-Atomen steht. p ist eine ganze Zahl von 1—4, vorzugsweise 1—3, besonders bevorzugt 2. Besonders bevorzugt sind aliphatische Reste mit 2—12 C-Atomen oder ein Arylrest wie Phenyl, Tolyl, Naphthyl, Diphenylmethan- und Diphenylätherreste.

Bevorzugt verwendet werden die technisch leicht zugänglichen Gemische aus Toluylen-diisocyanaten, m-Phenylendiisocyanat, sowie phosgenierte Kondensate aus Anilin und Formaldehyd mit Polyphenylen-methylen-struktur und die symmetrischen Verbindungen 4,4'-Diisocyanatodiphenylmethan, 4,4'-Diisocyanatodiphenyläther, p-Phenylendiisocyanat und 4,4'-Diisocyanatodiphenyldimethylmethan sowie Isophorondiisocyanat und Hexamethylendiisocyanat.

Die Isocyanate können in freier Form, ferner zum Teil oder vollständig auch in Form ihrer beim Umsatz mit reaktiven Wasserstoff enthaltenden Verbindungen zugänglichen und unter den Reaktionsbedingungen als Isocyanat-Abspalter reagierenden Derivate eingesetzt werden.

Vorzugsweise werden als Abspalter die Additionsprodukte aus Lactamen, Oximen und CH-aciden Verbindungen sowie die aus aliphatischen Mono- und Polyhydroxy-Verbindungen erhaltenen Carbamidsäureester beispielsweise der allgemeinen Formel

$$R^7(—NH—\underset{\underset{O}{\|}}{C}—O—M)_p \qquad \text{bzw.} \qquad \left[—\underset{\underset{O}{\|}}{C}—NH—R^7—NH—\underset{\underset{O}{\|}}{C}—O—Q—O\right]_q$$

eingesetzt, worin $R^7$ und p die oben angegebene Bedeutung haben und M der organische Rest einer Monohydroxyverbindung bzw. Q der organische Rest einer bis- oder trisfunktionellen Hydroxyverbindung, vorzugsweise M und Q, gleich oder verschieden, ein aliphatischer Rest mit 1—10 C-Atomen, ein cycloaliphatischer Rest mit 5—12 C-Atomen und/oder ein aliphatisch-aromatischer Rest mit 7—12 C-Atomen ist, die jeweils noch mit Alkyl-, mit $C_1$—$C_{12}$ und/oder Arylgruppen mit $C_5$—$C_{12}$ substituiert sein können, und q für eine ganze Zahl von 1 bis 1000, vorzugsweise 1 bis 10 steht.

Als Beispiele seien die Carbamidsäureester, aliphatische Monoalkohole wie Methanol, Ethanol, Propanol, Isopropanol, Butanol, Isobutanol, Cyclohexanol, Allylalkohol, Benzylalkohol und aliphatische Di- oder Polyole wie Ethylenglykol, Trimethylolpropan, Glycerin und Trishydroxyethylisocyanurat, weiterhin die Additionsprodukte mit Pyrrolidon-(2), Caprolactam, Butanon-oxim, Malonester, Acetessigester und Acetophenon aufgeführt.

Die Isocyanat-Abspalter können als solche eingesetzt oder erst in situ durch Umsetzung mit den entsprechenden Reaktanten erzeugt werden.

Anstelle der genannten (Poly)Isocyanate können auch die analogen (Poly)-Isothiocyanate als Ausgangsmaterialien benutzt werden.

Für das Verfahren können als nicht phenolische Lösungsmittel Benzylalkohol, Acetophenon, γ-Butyrolacton, Benzoesäuremethyl- oder -ethylester sowie deren Gemische verwendet werden.

Als Verschnittmittel sind außerdem aliphatische und aromatische Kohlenwasserstoffe wie Cyclohexan, Xylol, Toluol der deren technische Gemische wie Solvesso 100 mit Solventnaphtha geeignet.

Zur Reaktion sind bekanntlich gemäß den obigen Ausführungen alle Polycarbonsäuren, deren partielle oder vollständige Ester und/oder Anhydride sowie alle Polyole des Standes der Technik geeignet und verwendbar.

Beispiele derartiger Polycarbonsäuren sind oben bereits angeführt worden. Sie können dabei teilweise oder vollständig als Ester der oben bereits als Blockmittel aufgeführten Alkohole und/oder teilweise oder vollständig in Form ihrer Anhydride eingesetzt werden.

Der Umsatz der polyfunktionellen, mit den Polycarbonsäuren und/oder Anhydriden und/oder Oligoestern abgemischten bzw. verknüpften Aminocarbonsäurederivate mit den organischen Isocyanaten, weiteren Polycarbonsäuren und/oder deren Ester und/oder Anhydriden und Polyolen zu den beanspruchten Hydantoinringe enthaltenden Polymeren kann in Lösungsmitteln, die unter den Reaktionsbedingungen nicht reagieren oder lockere, weiterreagierende Additionsverbindungen bilden oder in Substanz oder in einem Überschuß einer der Reaktionskomponenten durchgeführt werden.

Zur Durchführung der Reaktion werden die Reaktionskomponenten mit Lösungsmittel und Blockierungsmittel einige Minuten bis zu mehreren Stunden bei Temperaturen von −20 bis 500°C vorzugsweise bei 20 bis 400°C gehalten. Der Reaktionsverlauf kann über die Gasentwicklung und die IR-Spektren verfolgt werden. Die charakteristischen Banden der Polymeren, vorzugsweise für die Hydantoinring- und Amid- sowie Imid-Struktur können eindeutig durch IR-Spektren belegt werden. Die hoch = molekularen Hydantoinringe enthaltenden Verbindungen besitzen Lösungsviskositäten von 300 bis 500 000 mPas, vorzugsweise von 500—200 000 mPas, die beispielsweise in 30 %igen Lösungen in Benzylalkohol oder γ-Butyrolacton usw. bei 25°C bestimmt werden.

Im allgemeinen werden pro Val der erfindungsgemäßen Kombination aus polyfunktionellen α-Aminocarbonsäurederivaten und sauren Gruppen und/oder Oligoestern 1 Val eines organischen Isocyanats eingesetzt doch sind auch sehr weitgehende Abweichungen von diesen Mengenverhältnissen möglich, um das Eigenschaftsprofil der erfindungsgemäßen Polymeren jedem möglichen Anwendungsfall anpassen zu können. Allerdings sind nur solche Molverhältnisse zweckmäßig, die zumindest schmelzbare und/oder in organischen, vorzugsweise nichtphenolischen Lösungsmitteln universell lösliche Produkte ergeben. Vorzugsweise werden mindestens 0,1, höchsten 49 Mol-% an polyfunktionellen α-aminocarbonsäurederivaten zur Polykondensation verwendet. Beispielsweise werden aus jeweils bisfunktionellen Reaktanten in Abhängigkeit von den stöchiometrischen Verhältnissen hochmolekulare Polyhydantoine, Hydantoinisocyanate oder Hydantoincarbonsäuren bzw. deren Anhydride erhalten.

Im einzelnen wird man demnach die Menge der sauren Gruppen so vorgeben, daß sie in Kombination mit der Menge des polyfunktionellen α-Aminocarbonsäurederivates der insgesamt vorhandenen organischen Isocyanatmenge Äquivalent ist.

Andererseits können sowohl die organischen Isocyanate wie auch die sauren Gruppen bzw. Oligoester in beliebigen Mengen, vorzugsweise im Überschuß, eingesetzt und gegebenenfalls gleichzeitig oder anschließend mit gegebenenfalls mehrwertigen Aminen, gegebenenfalls mehrwertigen Alkoholen, wie beispielsweise in den obigen Patentschriften aufgeführt und beispielsweise Ethylenglykol, Dipropylenglykol, Trimethylolpropan, Glycerin, Trishydroxyethylisocyanurat und/oder der Komination aus Cyanursäuretriarylestern und Polyolen und/oder gegebenenfalls mehrwertigen Carbonsäuren und/oder deren Ester und/oder deren Anhydriden, beispielsweise auf Basis der obengenannten Polycarbonsäuren, vorzugsweise der Phthalsäure, Isophthalsäure, Terephthalsäure, Trimellitsäure, Pyromellithsäure, Butantetracarbonsäure usw., gegebenenfalls unter Einsatz weiterer Polyisocyanate, gegebenenfalls auch von Polyisocyanuratopolyisocyanate bzw. deren Abspalter, sowie gegebenenfalls unter Zusatz von Hilfs- und Zusatzstoffen wie ε-Caprolactam, ε-Caprolacton usw. zu linearen und/oder verzweigten Hydantoinringe enthaltenden Polymeren mit beispielsweise Carbamidester-, Amid- und/oder Imidgruppen von guter Löslichkeit, hervorragender Temperaturbeständigkeit, hoher Elastizität und ausgezeichnetem Hitzeschockverhalten umgesetzt werden.

Mit ähnlichem Erfolg können die Kondensationsprodukte, gegebenenfalls auch ihre Vorstufen, Polyestern, vorzugsweise Hydroxylgruppen enthaltenden Polyestern, z.B. vorzugsweise aus Maleinsäureanhydrid, Phthalsäureanhydrid und/oder Maleinsäure, Fumarsäure, Bernsteinsäure, Phthalsäure, Isophthalsäure, Terephthalsäure, Trimellithsäure und/oder Trimellithsäureanhydrid und/oder deren Ester, Ethylenglykol, Dipropylenglykol, Glycerin, Trimethylolpropan und/oder Trishydroxyethylisocyanurat und/oder der Kombination aus Cyanursäuretriarylestern und Polyolen, Polyethern, beispielsweise aus Ethylenoxid und/oder Bis-(hydroxyphenyl)-propan und Epichlorhydrin, Polyurethanen, Polyamiden, Polyolefinen, Polyacetaten, Polyepoxiden, Polyimiden, Polyamidimiden, Polyesterimiden, Polyesteramidimiden, Polyiminopolyestern, Polyimidisocyanaten usw. zugemischt und gegebenenfalls an- und/oder einkondensiert oder die erfindungsgemäße Reaktion in Gegenwart

dieser Komponenten durchgeführt werden. In allen Fällen entstehen dabei modifizierte Polymere, die neben den (Thio)Hydantoinringen gegebenenfalls zusätzliche Ether-, Carbonsäureester-, Carbamidester-, Carbonsäureamid-, -imid-, -esteramid-, -esterimid-, -amidimid- und/oder -esteramidimidgruppierungen enthalten.

Die Mengenverhältnisse dieser Zusatzstoffe können in weiten Grenzen schwanken, vorzugsweise werden bezüglich des Kondensates 10—500 Gew.-% eingesetzt.

Zur weiteren Beschleunigung der Polymerisationsreaktionen sind die bekannten Katalysatoren wie Basen, beispielsweise Triethylamin, N-Methylmorpholin, Endoethylenpiperazin, wie Metalle, insbesondere von Eisen, Blei, Zink, Zinn, Kupfer, Mangan, Kobalt, Titan, beispielsweise Titantetrabutylat, Titanaminoalkohol, Eisenacetylacetonat, Dibutylzinnlaurat, Bleiacetat, Zinkoctoat oder Phosphorverbindungen wie Trialkylphosphin, zu verwenden.

Zuweilen ist es vorteilhaft, die Reaktion in mehreren Stufen durchzuführen. So kann beispielsweise in einer ersten Stufe in einem Lösungs- und Blockmittel ein Addukt oder Kondensat hergestellt werden, das dann bei höherer Temperatur, eventuell unter Verdampfung des Lösungsmittels, gegebenenfalls nach Zusatz von Blockierungsmitteln unter cyclisierung und/oder Kettenverlängerung und/oder Vernetzung in das gegebenenfalls hochmolekulare Kondensationsprodukt übergeht. Wird dieses dann zur Beschichtung verwendet, so kann es auch aus Schmelzen oder wäßrigen Systemen oder als Pulver appliziert werden.

In einer weiteren Ausführungsform des Verfahrens werden beliebige Isocyanatgemische verwendet, wodurch beispielsweise in beliebigen Teilschritten jeweils andere organische Isocyanate eingesetzt werden können.

Im Rahmen des Verfahrens können Produkte mit gegebenenfalls verkappten isocyanatgruppen entstehen. Durch Verwendung von Isocyanatgemischen, beispielsweise aus poly- und monofunktionellen Isocyanaten ist der Polymerisationsgrad der Reaktion zu steuern. Demnach können Produkte mit vergleichbarem Polymerisationsgrad, aber geringerem, gegebenenfalls verkapptem Isocyanatgehalt durch Mitverwendung berechneter Anteile an Monoisocyanaten hergestellt werden. Geeignet sind beispielsweise Phenylisocyanat, $\alpha$-Naphthylisocyanat, Isocyanatobenzoesäureester, Isocyanatoessigsäureester.

Mitunter wird die Umsetzung zweckmäßigerweise unter einem inerten Schutzgas wie $N_2$ oder Argon durchgeführt. Schließlich kann die Reaktion in kontinuierlicher oder diskontinuierlicher Ausführung oder gegebenenfalls in Autoklaven unter Druck zum Zwecke einer höheren Reaktionstemperatur erfolgen.

Die nach dem Verfahren zugänglichen Hydantoingruppen enthaltenden Polymere besitzen eine ausgezeichnete Temperaturbeständigkeit sowie eine gute Löslichkeit auch in vorzugsweise phenolfreien Lösemitteln.

Die Polymeren können zur Herstellung temperaturbeständiger beschichtungsmittel, Lacke, Pulver, vorzugsweise zur Beschichtung hitzeresistenter Substrate verwendet werden. Ihre Eigenschaften können je nach Einsatzgebiet durch Zusatz von Füllstoffen, Pigmenten, nieder- und hochmolekularen Komponenten, wie Polyurethane, Polyester, Polyesterimide, Polyimide, Polyamidimide, Polyesteramidimide, Polyamide, Polyvinylacetate, Epoxide, Polycyanate, Siliconharze in weiten Grenzen veriiert werden.

Die Hydantoingruppen enthaltenden Polymeren, vorzugsweise Polyhydantoinamide, die gegebenenfalls noch mit Ester-, Imid- und/oder isocyanuratgruppen modifiziert sind, sind vorzugsweise für Einbrennlacke, insbesondere Draht- bzw. Elektroisolierlacke geeignet. Diese Lackbindemittel kommen dabei im allgemeinen in Lösungsmitteln oder Lösungsmittelgemischen zum Einsatz, denen erfindungsgemäß zusätzlich ein gewisser Anteil Nichtlöser bzw. Verschnittmittel zugesetzt werden kann. Diese Verschnittmittel sind aliphatische, vorzugsweise aromatische Kohlenwasserstoffe, gegebenenfalls auch niedere Alkohole, beispielsweise Cyclohexan, Toluol, Xylol, deren technische Gemische wie Solvesso und Solventnaphtha, sowie Ethanol, Butanol, Aminoalkohol.

Der Festgehalt der möglichen Lacklösungen kann in weiten Grenzen schwanken und wird vom Lösungsverhalten der Bindemittel, aber auch von beabsichtigten Einsatzzweck besimmt. Vorzugsweise liegt der Feststoffgehalt im Bereich von 20 Gew.-% bis 70 Gew.-%. Die erfindungsgemäßen Hydantoingruppen enthaltenden Polymeren besitzen selbst in nichtphenolischen Lösemitteln eine ausgezeichnete Löslichkeit und können auf den üblichen Lackiermaschinen sowie als Tränklacke mit Festgehalten bis zu 60%, gegebenenfalls auch aus der reinen Schmelze oder als Pulver, verarbeitet werden.

Schließlich wird auch die Härtungsreaktion des Beschichtungsmittels durch Zusatz der obengenannten Katalysatoren beschleunigt, d.h. die Reaktionszeit wird verkürzt bzw. die Einbrenntemperatur bei gleicher Zeit erniedrigt. Damit ist selbst auf besonders schnell laufenden Drahtlackiermaschinen eine vollständige Aushärtung des Lackfilms zu erzielen.

## Beispiel 1

223,2 g 3-(N-Ethoxycarbonylmethyl-)aminobenzoesäure werden bei ca. 100°C in

300 g $\gamma$-Butyrolacton gelöst, ab 45 bis 60°C mit der Lösung von

250,2 g 4,4'-Diisocyanatodiphenylmethan in

300 g Toluol vermischt, ca. 3 Stunden bei 25°C bis 35°C nachgerührt, darauf mit

0,5 g Endoethylenpiperazin versetzt, langsam auf 150 bis 160°C erhitzt und dabei Ethanol/Toluol/$CO_2$ ausgetragen. Anschließend kondensiert man ca. 6 Std. bei 200°C.

Im Zuge steigender Viskositat wird mit

595 g $\gamma$-Butyrolacton verdünnt.

Die Viskosität der erhaltenen Lösung beträgt bei 20°C 230 mPa.s.

Auf einer Drahtlackieranlage mit Düsenabstreifern und einem Einbrennschacht von 4 Metern Länge wird ein Cu-Draht von 0,7 mm Durchmesser auf eine Durchmesserzunahme von 0,755—0,7600 mm lackiert mit einer Abzugsgeschwindigkeit von 10 m/Min.

Der so hergestellte Lackdraht besitzt eine Erweichungstemperatur von 380°C und einen Hitzeschock von 260°C (eigener Durchmesser) und trotz ausgezeichneter Elastizität eine Filmhärte von 5 H. (DIN 46 453)

Die ausgezeichnete Haftung und Flexibilität bleibt auch nach Alterung bei höheren Temperaturen erhalten. So kann er selbst nach 14-tägiger Alterung bei 200°C noch um den eigenen Durchmesser gewickelt werden, ohne daß Risse im Lackfilm auftreten.

Beispiel 2

223,2 g 3-(N-Ethoxycarbonylmethyl-)aminobenzosäure werden bei ca. 100°C in

300 g $\gamma$-Butyrolacton gelöst, ab 45 bis 60°C mit

325,3 g 4,4'-Diisocyanato-diphenylmethan versetzt, ca. 3 Std. bei 25°C bis 35°C gerührt, dann mit

0,5 g Endoethylenpiperazin versetzt und langsam bei 150—160°C Ethanol/$CO_2$ ausgetragen. Anschließend kondensiert man 5 Std. bei 200°C.

Mit zunehmender Viskosität verdünnt man mit höchstens

200,0 g Benzoesäuremethylester, verdünnt aber erst nach 5 Std. 200°C mit

285 g Benzylalkohol, homogenisiert noch ca. 2 Stunden bei ca. 200°C.

Viskosität der 40 %igen Lösung: 7240 mPa.s, 20°C.

Die ca. 40 %ige Oligohydantoinlacklösung wird mit

1612 g Cyclohexanon verdünnt und mit

1075 g eines Polyesters aus 4,0 Mol Dimethylterephthalat, 0,8 Mol Trimellithsäureanhydrid, 0,9 Mol Terephthalsäure, 2,0 Mol Tris-(2-hydroxyethyl)-isocyanurat, 0,5 Mol Glycerin, 7,0 Mol Ethylenglykol, 200 g Solvesso, 3,0 g Bleiacetat und 1,0 g Butyltitanat mit einem Hydroxylgruppengehalt von ca. 4,5 Gew.-% versetzt.

Man homogenisiert das Gemisch 1 Stunde bei 180 bis 200°C, gibt dann bei 100°C bis 80°C die Lösung von

16 g Titantetrabutylat in

32 g Acetylaceton hinzu und rührt noch 1 Stunde bei 80 bis 70°C nach.

Die Viskosität der ca. 40 %igen Lacklösung beträgt ca. 1720 $cP_{20^oC}$.

Mit ihr werden in einem 4 m Lackierofen Cu-Drähte von 1,0 mm Durchmesser mit einer Geschwindigkeit von 8m/Min. beschichtet und bei Temperaturen bis 420°C eingebrannt. Der hervorragend elektrisch isolierende, relativ harte, dennoch elastische und chemikalienfeste Lackfilm besitzt eine Erweichungstemperatur von mindestens 330°C sowie eine Hitzeschockfestigkeit von mindestens 240°C.

Beispiel 3

33,2 g Isophthalsäure und

16,6 g Terephthalsäure werden mit

700 g Acetophenon vermischt, ca. 5 Minuten bei 170—180°C temperiert, dann bei 50°C mit

278,95 g N,N'-Bis-(2-methoxycarbonylpropyl-2)-4,4'-diaminodiphenylmethan versetzt und schließlich 30—50°C mit der Lösung von

250,2 g 4,4'-Diisocyanatodiphenylmethan in

300 g Toluol verrührt.

Nach ca. 5 Stunden bei 30—40°C versetzt man mit

0,5 g Endoethylenpiperazin, heizt langsam über 60, 80, 120, 150 auf 175°C, trägt dabei $CO_2$, Methanol, Toluol usw. aus und kondensiert schließlich das Gemasch 1 Stunde bei 190°C, 3 Stunden bei 200—205°C und 2 Stunden bei 205—210°C.

Im Zuge steigender Viskosität wird mit

485 g Benzoesäuremethylester verdünnt und ca. 1 Stunde bei 170—150°C nachgerührt.

Die ca. 30%ige Lacklösung besitzt eine Viskosität von 65 000 cP 20°C und wird mit Benzoesäuremethylester auf ca. 20% herunterverdünnt.

Der entsprechend den in Beispiel 1 genannten Bedingungen hergestellte 0,7 mm Cu-Lackdraht besitzt eine Erweichungstemperatur von > 380°C (DIN 46 453), einen Hitzeschock von > 260°C, eine Schabefestigkeit von ca. 50 Doppelhüben, eine Lackfilmhärte (DIN 46 453) von 4 H, eine Spannungsfestigkeit von > 10 kV, sowie eine gute Chemikalienbeständigkeit.

Beispiel 4

33,2 g Isophthalsäure und

8,3 g Terephthalsäure werden bei Raumtemperatur unter $N_2$ mit

300 g $\gamma$-Butyrolacton,

200 g Benzoesäureethylester und

200 g Toluol vermischt, dann mit

298.9 g N,N'-Bis-(2-methoxycarbonylpropyl-2)-4,4'-diaminodiphenylmethan versetzt und ab 25—35°C mit

325,3 g 4,4'-Diisocyanatodiphenylmethan verrührt. Man rührt 3 Stunden bei ca. 50°C nach, versetzt mit

0,5 g Endoethylenpiperazin, heizt unter Austragung von Methanol, Toluol, $CO_2$ usw. rasch auf 150—160°C und kondensiert schließlich ca. 5 Stunden bei 200—205°C.

Im Zuge steigender Viskosität wird mit

491 g Benzylalkohol verdünnt und Ca. 1 Stunde bei ca. 200—205°C nachgerührt.

Die ca. 40 %ige Oligohydantoinlacklösung besitzt eine Viskosität von 8 200 $cP_{20°C}$. Sie wird mit

1000 g Benzylalkohol,

500 g Benzoesäuremethylester und

480 g Acetophenon verdünnt und mit

1321 g eines Polyesters aus 4,7 Mol Dimethylterephthalat, 1,0 Mol Terephthalsäure, 1,9 Mol Tris-(2-hydroxyethyl)-isocyanurat, 0,6 Mol Trimethylolpropan, 10,0 Mol Ethylenglykol, 300 g Solvesso, 2,0 g Bleiacetat und 1,0 g Butyltitanat mit einem Hydroxylgruppengehalt von ca. 4,5 Gew.-% versetzt.

Man homogenisiert das Gemisch 1 Stunde bei 180—200°C, gibt dann bei 100—80°C die Lösung von

20 g Titantetrabutylat in

40 g Acetylaceton hinzu und rührt noch 1 Stunde bei 70—80°C nach.

Die Viskosität der ca. 40 %igen Lacklösung liegt bei ca. 1450 cP 20°C.

Die mit ihr in einem 4 m Lackierofen bei 9 m/Min. Abzugsgeschwindigkeit beschichteten Cu-Drähte von 0,7 mm Durchmesser besitzen eine Erweichungstemperatur von mindestens 330°C, einen Hitzeschock von mindestens 260°C.

Beispiel 5

74,8 g Isophthalsäure werden unter $N_2$ mit

150 g γ-Butyrolacton und

200 g Toluol vermischt, dann mit

298,9 g N,N'-Bis-(2-methoxycarbonylpropyl-2)-4,4'-diaminodiphenylmethan versetzt und darauf ab 35—40°C mit

375,4 g 4,4'-Diisocyanatodiphenylmethan verrührt. Man rührt ca. 12 Stunden bei Raumtemperatur nach, versetzt dann bei ca. 30—40°C mit der Lösung von

150 g 4,4'-Diisocyanatodiphenylmethan in

100 g Toluol, rührt 1 Stunde bei 50°C nach, fügt

0,5 g Endoethylenpiperazin und

200 g Terephthalsäuredimethylester hinzu, homogenisiert und heizt unter Austragung, gegebenenfalls unter 200 Torr von $CO_2$, Methanol, Toluol usw. rasch über 160°C auf 200°C und kondensiert ca. 3 Stunden bei 200—205°C. Anschließend werden ab 170°C mit

345,8 g Trimellithsäureanhydrid versetzt, homogenisiert und 1 Stunde bei 190°C, 3 Stunden bei 200—205°C und 1 Stunde bei 205—215°C kondensiert.

Danach wird das Gemisch bei ca. 170°C mit

518,5 g Terephthalsäuredimethylester

653,0 g Tris-(2-hydroxyethyl)-isocyanurat,

3,0 g Bleiacetat,

1,0 g Butyltitanat und

50 g Xylol versetzt, homogenisiert und dann in ca. 6 h über 170°C bei 200—220°C soweit kondensiert, bis kein Destillat unter 150°C mehr übergeht.

Schließlich versetzt man bei 170°C mit

184 g Ethylenglykol und

46 g Glycerin, kondensiert nochmals bei 200—220°C bis kein Destillat mehr unter 150°C unfällt un kondensiert dann bei 210—230°C zunächst direkt, schließlich unter ca. 200 Torr soweit, daß das mit γ-Butyrolacton auf ca. 50% verdünnte Harz ein Viskosität von ca. 12 000 $cP_{20°C}$ besitzt. Zum Drahtlackierversuch wurde der Ansatz bei 150—120°C mit

2270 g ε-Caprolacton verdünnt, mit der Lösung von

12 g Titantetrabutylat in

24 g Acetylaceton versetzt und ca. 1 Stunde bei 120—100°C homogenisiert.

Die ca. 50 %ige Lacklösung besitzt eine Viskosität von 11 300 cP 20°C und wird zum Lackieren mit einer Mischung aus Benzylalkohol/Solventnaphtha im Verhältnis 2:2 auf 35% weiterverdünnt.

Der in einem 4 m Ofen bei 9 m/Minute hergestellte 0,7 mm Cu-Lackdraht wurde nach DIN 46 453 geprüft. Er besitzt eine Erweichungstemperatur von mindestens 330°C, einen Hitzeschock von mindestens 260°C, eine Schabefestigkeit von mindestens 90 Doppelhüben, eine Filmhärte von mindestens 5 H, eine Durchschlagfestigkeit von mindestens 9 kV und eine gute Chemikalienbeständigkeit.

Beispiel 6

800,0 g der Lösung des N,N'-Bis-(2-methoxycarbonylpropyl-2)-4,4'-diaminodiphenylmethan in einem Gemisch aus γ-Butyrolacton (40 %) und Toluol (60 %) (N-Gehalt 2,63 %) werden unter $N_2$ mit

8,3 g Isophthalsäure und

76,8 g Trimellithsäureanhydrid sowie ab 30°C mit

375,3 g 4,4'-Diisocyanatodiphenylmethan versetzt. Man homogenisiert mindestens 1 Stunde bei ca. 30—45°C, versetzt dann mit

0,5 g Triäthylendiamin und trägt dann unter Erwärmung bis auf ca. 180°C den größten Teil Toluol aus. Nach ca. 30 Minuten bei 180°C werden bei ca. 120°C

150,0 g 4,4'-Diisocyanatodiphenylmethan,

345,8 g Trimellithsäureanhydrid und

200,0 g Acetophenon eingetragen und das Gemisch ca. 4 Stunden, bei 200°C gehalten. Schließlich gibt man bei 170—180°C

175,0 g Terephthalsäuredimethylester,

271,2 g Tris-(2-hydroxyäthyl)-isocyanurat,

1,0 g Butyltitanat und

3,0 g Bleiacetat hinzu, versetzt nach ca. 4 Stunden bei 200°C mit

370,0 g Äthylenglykol und erhitzt noch 2 Stunden auf bis zu 220°C.

Es werden 1665,0 g eines spröden harzes mit einem Feststoffgehalt von ca. 85,6 % und einer Viskosität von 26 000 cP, gemessen in 50 %iger Butyrolactonlösung von 20°C, erhalten.

1050 Gew.-Teile des so erhaltenen Harzes werden in

1200 Gew.-Teile γ-Butyrolacton gelöst. Danach werden langsam unter Rühren

750 Gew.-Teile Solventnaphtha zugegeben und die Mischung mit

1,5 Gew.-Teile Titan-tetrabutylat versetzt, welches vorher durch kurzes Erwärmen in ca. 10 $cm^3$ Kresol stabilisert worden war.

Auf einer Drahtlackiermaschine mit Düsenabstreifern (Ofenlänge 5 Meter) wird ein Draht von 0,7 mm Durchmesser auf eine Zunahme von ca. 50 μm lackiert. Die Lackiergeschwindigkeit beträgt 18 m/Min.

Der so hergestellte Lackdraht besitzt eine Außenfaserdenhung von über 88 %, ist bis über 200°C hitzeschockfest und seine Erweichungstemperatur liegt höher als 320°C.

Beispiel 7

a) Unter den in Beispiel 6 angeführten bedingungen werden bei sonst unveränderten Mengen der Reaktionskomponenten insgesamt

310,7 g Terephthalsäuredimethylester und anstelle des Tris-(2-hydroxyäthyl)-isocyanurates insgesamt

336,0 g einer Mischung aus

356,0 g Trisphenoxytriazin und

350,0 g Äthylenglykol, der zuvor bei ca. 150—170°C unter ca. 200 Torr in ca. 2 Stunden ca. 370,0 g Phenol entzogen wurden,

umsetzt.

Man erhält ca. 1875,0 g eines braunroten Festharzes, mit einem Feststoffgehalt von 89,6 % und einer Viskosität von 45 800 mPa.s, gemessen in 50 %iger Butyrolactonlösung.

b) Analog den in Beispiel 7 a aufgeführten Bedingungen werden bei sonst unveränderten Mengen der Reationskomponenten anstelle des Terephthalsäuredimethylesters

406,4 g Terephthalsäurebisglykolester

eingesetzt und unter der in Beispiel 6 angeführten Reaktionsführung 1804,0 g eines spröden, braunroten Harzes erhalten.

Der Feststoffanteil im Harz beträgt 91,5 %, ddie Viskosität einer 50 Gew.-%igen Lösung in Butyrolacton liegt bei 20°C bei 52 400 mPa.s.

Mit Butyrolacton werden die nach a und b gewonnenen Harze auf 20 % Festgehalt heruntverdünnt.

Entsprechend den im Beispiel Nr. 1 genannten Lackierbedingungen werden Cu-Drähte von 0,7 mm Durchmesser hergestellt und nach DIN 46 453 geprüft.

Es werden in beiden Fällen Lackdrähte mit Erweichungstemperaturen > 330°C, Hitzeschockfestigkeit > 200°C und einer Außenfaserdehnung > 88 % erhalten.

Beispiel 8

Die Suspension aus

299,0 g N,N'-Bis-(2-methoxycarbonylpropyl-2-)-4,4'-diaminodiphenylmethan,

150,0 g $\gamma$-Butyrolacton,

300,0 g Toluol,

8,3 g Isophthalsäure und

57,6 g Trimellithsäureanhydrid wird ab 25°C bis maximal 45°C unter $N_2$ portionsweise mit insgesamt

350,3 g 4,4'-Diisocyanatodiphenylmethan versetzt, dann ca. 4 Stunden bei 40—45°C nachgerührt und anschließend bei 60°C mit

345,8 g Trimellithsäureanhydrid vermischt. Nach nochmals 1 Stunde bei 60°C werden bei 60—70°C

1,0 g Triäthylendiamin,

120,0 g 4,4'-Diisocyanatodiphenylmethan

250,0 g Terephthalsäuredimethylester und

50,0 g $\gamma$-Butyrolacton zugemischt.

Man heizt auf 200°C und kondensiert dann ca. 4 bis 6 Stunden bei 200—230°C.

Anschließend werden bei ca. 180°C

518,2 g Terephthalsäuredimethylester, bei 150—140°C

653,0 g Tris-(2-hydroxyäthyl)-isocyanurat, katalytische Menge Bleiacetat und Butyltitanat,

46,0 g Glycerin und

186,0 g Äthylenglykol zugegeben und in 6 bis 8 Stunden bei 200—230°C unter Abdestillation der Kondensationsprodukte und Zusatzstoffe kondensiert.

Es resultieren 2694,0 g eines spröden, klaren, braunroten Harzes mit einem Feststoffanteil von 90,3 Gew.-% (nach DIN), einer Viskosität von 22 000 mPas, gemessen in 50 Gew.-%iger $\gamma$-Butyrolactonlösung von 20°C.

990 Gew.-Teile des erhaltenen Harzes werden unter Erwärmen in
1410 Gew.-Teile Benzylalkohol gelöst und anschließend unter intensivem Rühren mit
600 Gew.-Teile Xylol versetzt.

Nach dem Erkalten wird mit

6 Gew.-Teile Titan-tetra-butylat (vorher durch kurzes Aufkochen in 10 $cm^3$ Kresol stabilisiert) versetzt.

Mit dieser Lösung wird entsprechend den Bedingungen des Beispiel 7 ein Cu-Draht von 0,7 mm auf 0,75 mm Durchmesser lackiert. Die Ausprüfung nach DIN 46 453 ergibt einen Lackdraht mit einer Hitzeschockfestigkeit von > 200°C und Erweichungstemperaturen von über 330°C. Der Anstieg der Kurve tan $\delta$ (Temperatur) liegt bei 185°C.

Beispiel 9

350,3 g 4,4'-Diisocyanatodiphenylmethan werden ab 25 bis 60°C unter $N_2$ in die Suspension aus

299 g N,N'-Bis-(2-methoxycarbonylpropyl-2)-4,4'-diaminodiphenylmethan,

150 g $\gamma$-Butyrolacton,

300 g Toluol

8,3 g Isophthalsäure und

57,6 g Trimellithsäureanhydrid eingetragen. Nach 1-stündigem Rühren bei 60°C setzt man

345,8 g Trimellithsäureanhydrid zu, trägt

1,0 g Triäthylendiamin ein und rührt ca. 1 Stunde bei 60°C nach.

Nach Zugabe von

120 g 4,4'-Diisocyanatodiphenylmethan,

200 g Terephthalsäuredimethylester

50 g $\gamma$-Butyrolacton wird unter Abdestillieren des Toluols auf 200—230°C erhitzt und dabei ca. 4 bis 6 Stunden kondensiert. Anschließend werden bei 180°C

382 g Terephthalsäuredimethylester und bei 150°C

734,1 g Tris-(2-hydroxyethyl)-isocyanurat,

275 g eines Polyester aus 1,0 Mol Terephthalsäure, 0,38 Mol Glycerin und 0,72 Mol Glykol mit einem Hydroxylgruppengehalt von ca. 6,0 Gew.-% und katalytische Mengen Bleiacetat und Butyltitanat eingerührt.

Nach einer abschließenden Kondensationszeit von 4—6 Stunden bei 200—220°C werden 2724 g eines klaren, hellrotbraunen, spröden Festharzes mit einem Harzanteil von 90,3 % (nach DIN) und einer Viskosität von 22070 mPa.s, gemessen in 50 %iger $\gamma$-Butyrolactonlösung von 20°C, erhalten.

In einer Schmelzapplikationsvorrichtung wird mit dem ca. 170°C heißen Schmelzharz bei einer

Schmelzviskosität von 2000 mPa.s in an sich bekannter Weise ein Cu-Draht von 0,7 mm Durchmesser mit 8 m/Min. auf eine Stärke von 0,75 mm beschichtet und bei 410°C eingebrannt. Der hallbraune Lackdraht hat eine hohe Oberflächenhärte und Chemikalienfestigkeit sowie eine gute Elastizität, Durchschlag- und Hitzeschockfestigkeit. Der Erweichungspunkt liegt über 330°C.

Beispiel 10

800 Gew.-Teile des nach Beispiel Nr. 6 hergestellten Harzes werden in
1200 Gew.-Teile einer Mischung aus Kresol/Xylol wie 2:1 gelöst und mit
2 Gew.-Teile Titantetrabutylat — vorher durch Erwärmen mit Kresol (ca. 10 ml) stabilisiert — versetzt.

Diese Lösung wird mit

1000 Gew.-Teilen einer 35 %igen Lösung eines Polyesters aus Terephthalsäure:Glykol:Glycerin (Molverhältnis 1 :0,7 :0,4) mit einer SZ ca. 4 und einem OH-Gehalt von ca. 6 % in Kresol/Xylol wie 1:1 versetzt. Diese Lösung enthält auf den Polyester berechnet 1,5 % Titanbutylat.

Mit den vereinigten lacklösungen wird auf der lackieranlage entsprechend Beispiel 6 ein Cu-Draht von 0,7 mm Durchmesser auf eine Stärke von 0,750 mm lackiert. Innerhalb des Drahtlackiergeschwindigkeitsbereiches von 18—26 m/Min. wird ein Lackdraht mit einer Hitzeschockfestigkeit > 180°C und einer Erweichungstemperatur > 300°C erhalten. Die Bleistifthärte liegt bei 3H — 2H.

Beispiel 11

16,6 g Terephthalsäure und 38,4 g Trimellitsäureanhydrid werden in 300 g Butyrolacton auf 180°C erhitzt, wobei das Trimellitanhydrid ganz und die Terephthalsäure teilweise in Lösung geht. Nach dem Abkühlen werden noch 199 g 4,4'-Bis-(methoxycarbonyl-isopropylamino)-diphenylmethan gelöst und bei 35—40°C mit 225 g 4,4'-Diisocyanato-diphenylmethan versetzt. Anderntags werden 0,5 g Triethylendiamin zugesetzt, auf 200°C erhitzt und 6 Stunden bei 200°C auskondensiert, wobei das entstehende Methanol und Kohlendioxid ausgetragen werden. Nach dem Verdünnen mit 682 g Butyrolacton werden 1400 g einer 30 %igen Lacklösung mit den charakteristischen Banden für Hydantoine bei 1720 — 1775 $cm^{-1}$ und für Amide bei 1680 $cm^{-1}$ erhalten. Die Viskosität $\eta_{25}$ beträgt nach dem Verdünnen mit Butyrolacton auf 15 Gew.-% 470 mPa s.

Durch weiteres Verdünnen mit Butyrolacton wird eine 22 %ige Lacklösung bereitet, mit der in einem Einbrennofen ein Kupferdraht von 0,7 mm Durchmesser analog Beispiel 2 lackiert wird.

Bei einer Abzugsgeschwindigkeit von 10 m/Min. wird ein Lackfilm mit einer Erweichungstemperatur von > 330°C, einem Hitzeschock von 260°C und einer Abreibfestigkeit (NEMA) von 20 erhalten.

**Patentansprüche**

1. Beschichtungsmittel, insbesondere Lackmischungen, enthaltend Polymere, die über (Thio)Hydantoinringe und Amidgruppen und gegebenenfalls Ester- und/oder Imid- und/oder Isocyanuratgruppen verknüpft sind und die durch Umsetzung von polyfunktionellen Aminocarbonsäurederivaten mit gegebenenfalls maskierten Polyisocyanaten und gegebenenfalls Polyhydroxy- und/oder cyclischen Anhydridverbindungen und/oder Isocyanuratopolyisocyanaten in Gegenwart von Carboxylgruppenhaltigen Verbindungen, die neben der Carboxylgruppe noch eine weitere funktionelle Gruppe enthalten, in nicht-phenolischen Lösungsmitteln erhalten worden sind, dadurch gekennzeichnet, daß als nicht-phenolische Lösungsmittel $\gamma$-Butyrolacton, Acetophenon, Benzoesäuremethyl- oder -ethylester, Benzylalkohol oder deren Gemische verwendet worden sind.

2. Beschichtungsmittel nach Anspruch 1, dadurch gekennzeichnet, daß als Carboxylgruppenhaltige Verbindungen Verbindungen der allgemeinen Formel II

$$(X)_z\text{—}R^1\text{—}COOH \qquad (II)$$

eingesetzt werden, in der

$R^1$ für einen z + 1-wertigen, gegebenenfalls substituierten aliphatischen, cycloaliphatischen, aliphatisch-aromatischen, heterocyclischen oder aromatischen Rest,

z für eine ganze Zahl von 1—4 und

X für eine Carboxyl-, Glycinsäurederivat-, Hydroxy-, Amino-, Carboxyester- oder cyclische Anhydridgruppe steht.

3. Beschichtungsmittel nach Anspruch 2, dadurch gekennzeichnet, daß in der allgemeinen Formel II

$R^1$ einen z + 1-wertigen, gegebenenfalls substituierten aliphatischen Rest mit $C_1$—$C_{20}$, cycloaliphatischen Rest mit $C_5$—$C_{12}$, aliphatisch-aromatischen Rest mit $C_6$—$C_{20}$, oder aromatischen Rest mit

$C_5$—$C_{12}$ oder einen Heteroatome wie N und/oder O und/oder S im Ring enthaltenden Aryl- oder Cycloalkylrest mit 5—12 C-Atomen und

z 1 bedeuten.

4. Beschichtungsmittel nach Ansprüchen 1—3, dadurch gekennzeichnet, daß die Carboxylgruppen erst während der Reaktion partiell oder vollständig aus cyclischen Anhydridverbindungen entstehen.

5. Beschichtungsmittel nach Ansprüchen 1—4, dadurch gekennzeichnet, daß als Carboxylgruppen-haltige Verbindungen der allgemeinen Formel

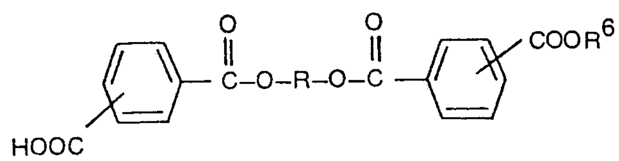

eingesetzt werden, in der

R einen mindestens zweiwertigen aromatischen Rest mit $C_5$—$C_{12}$, einen gesättigten oder ungesättigten aliphatischen mit $C_2$—$C_{20}$, cycloaliphatischen mit $C_5$—$C_{12}$ Rest, in dem aromatische, cycloaliphatische oder heterocyclische Ringsysteme sowie Ether-, Keto-, Ester- oder Sulfonbrücken enthalten sein können, und der gegebenenfalls durch Halogene, Nitro, oder alkoxygruppen mit $C_1$—$C_{20}$ substituiert sein kann, und

$R^6$ Wasserstoff oder einen gegebenenfalls substituierten aliphatischen mit $C_1$—$C_{20}$, aliphatisch-aromatischen mit $C_6$—$C_{20}$ oder aromatischen Rest mit $C_5$—$C_{12}$ bedeuten.

6. Beschichtungsmittel nach Ansprüchen 1—4, dadurch gekennzeichnet, daß als Carboxylgruppen-haltige Verbindungen Verbindungen der allgemeinen Formel

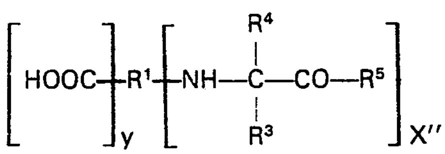

eingesetzt werden, in der

$R^3$ und $R^4$, gleich oder verschieden, für Wasserstoff, einen Alkylrest mit $C_1$—$C_{20}$, einen Arylrest mit $C_5$—$C_{12}$ oder einen Aralkylrest mit $C_6$—$C_{20}$, $R^5$ eine Hydroxylgruppe, eine Aminogruppe, eine $C_1$—$C_{20}$ Alkylamino-$C_1$—$C_{20}$ Dialkylamino-, $C_1$—$C_{20}$ Alkoxy- oder $C_5$—$C_{12}$ Aroxygruppe und

x'' und y, gleich oder verschieden, für eine ganze Zahl von 1—3 stehen.

7. Beschichtungsmittel nach Ansprüchen 1—6, dadurch gekennzeichnet, daß als carboxylgruppenhaltige Verbindungen Isophthalsäure und/oder Trimellithsäure und/oder Trimellithsäureanhydrid und/oder Terephthalsäure sowie den Isomeren, Carboxylgruppen enthaltenden Anilinoisobuttersäurederivate, den entsprechenden Oligoestern dieser Säuren mit untergeordneten Mengen Ethylenglykol, Propylenglykol, Glycerin, Trimethylolpropan und/oder Trishydroxyethylisocyanurat verwendet werden.

8. Verwendung der Beschichtungsmittel nach Ansprüchen 1—7 zur Herstellung von Überzügen.

9. Verwendung der Beschichtungsmittel nach Anspruch 8 zur Drahtlackierung.

**Claims**

1. Coating compositions, in particular lacquer mixtures, containing polymers which are attached through (thio)hydantoin rings and amide groups and, optionally, ester and/or imide and/or isocyanurate groups and which have been obtained by reacting polyfunctional amino carboxylic acid derivatives with optionally masked polyisocyanates and, optionally, polyhydroxy and/or cyclic anhydride compounds and/or isocyanurate polyisocyanates in the presence of carboxyl-group-containing compounds which, in addition to the carboxyl group, also contain another functional group, in non-phenolic solvents, characterised in that $\gamma$-butyrolactone, acetophenone, benzoic acid methyl or ethyl ester, benzyl alcohol or mixtures thereof have been used as the non-phenolic solvents.

2. Coating compositions according to Claim 1, characterised in that the carboxyl-group-containing compounds used are compounds of the general formula II

$$(X)_z—R^1—COOH \qquad (II)$$

in which

$R^1$ represents a z + 1-functional, optionally substituted aliphatic, cycloaliphatic, aliphatic-aromatic, heterocyclic or aromatic radical,

z represents an integer from 1—4 and

X represents a carboxyl, glycine acid derivative, hydroxy, amino, carboxyl ester or cyclic anhydride group.

3. Coating compositions according to Claim 2, characterised in that in the general formula II

$R^1$ denotes a z + 1-functional, optionally substituted $C_1$—$C_{20}$ aliphatic radical, $C_5$—$C_{12}$ cycloaliphatic radical, $C_6$—$C_{20}$ aliphatic-aromatic radical, or $C_5$—$C_{12}$ aromatic radical or an aryl or cycloalkyl radical with 5—12 C atoms containing hetero atoms, such as N and/or O and/or S, in the ring and

z denotes 1.

4. Coating compositions according to Claims 1—3, characterised in that the carboxyl groups are partly or completely formed from cyclic anhydride compounds during the reaction.

5. Coating composition according to Claims 1—4, characterised in that the carboxyl-group-containing compounds used are compounds of the general formula

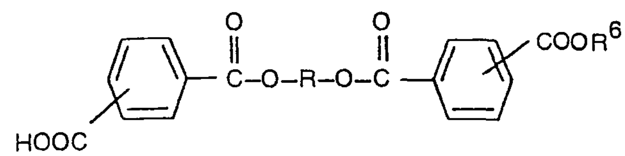

in which

R denotes an at least difunctional $C_5$—$C_{12}$ aromatic radical, a saturated or unsaturated $C_2$—$C_{20}$ aliphatic radical, a $C_5$—$C_{12}$ cycloaliphatic radical wherein aromatic, cycloaliphatic or heterocyclic ring systems and also ether, keto, ester or sulphone bridges may be present and which may optionally be substituted by halogens, nitro or $C_1$—$C_{20}$ alkoxy groups, and $R^6$ denotes hydrogen or an optionally substituted $C_1$—$C_{20}$ aliphatic, $C_6$—$C_{20}$ aliphatic-aromatic or $C_5$—$C_{12}$ aromatic radical.

6. Coating compositions according to Claims 1—4, characterised in that the carboxyl-group-containing compounds used are compounds of the general formula

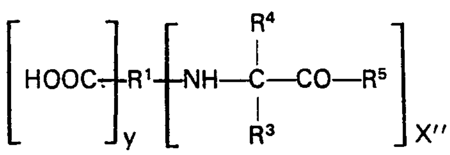

in which

$R^3$ and $R^4$, which are identical or different, represent hydrogen, a $C_1$—$C_{20}$ alkyl radical, a $C_5$—$C_{12}$ aryl radical or a $C_6$—$C_{20}$ aralkyl radical,

$R^5$ represents a hydroxyl group, an amino group, a $C_1$—$C_{20}$ alkyl amino, $C_1$—$C_{20}$ dialkyl amino, $C_1$—$C_{20}$ alkoxy or $C_5$—$C_{12}$ aroxy group and x″ and y, which can be identical or different, represent an integer from 1—3.

7. Coating compositions according to Claims 1—6, characterised in that isophthalic acid and/or trimellitic acid and/or trimellitic acid anhydride and/or terephthalic acid and the isomeric carboxyl-group-containing anilino-isobutyric acid derivatives and the corresponding oligo esters of these acids with small quantities of ethylene glycol, propylene glycol, glycerol, trimethylol propane and/or tris-hydroxy ethyl isocyanurate are used as the carboxyl-group-containing compounds.

8. Use of the coating compositions according to Claims 1—7 for the production of coatings.

9. Use of the coating compositions according to Claim 8 for lacquering wires.

**Revendications**

1. Compositions de revêtement, notamment mélanges pour peintures, contenant des polymères qui sont enchaînés par l'intermédiaire de noyaux de (thio)hydantoïne et de groupes amide et, le cas échéant, de groupes ester et/ou imide et/ou isocyanurate et qui ont été obtenus par réaction de dérivés d'acides aminocarboxyliques polyfonctionnels avec des polyisocyanates éventuellement bloqués et, le cas échéant, des composés polyhydroxyliques et/ou des anhydrides cycliques et/ou des isocyanuratopolyisocyanates en présence de composés portant un groupe carboxyle, qui contiennent, à côté du groupe carboxyle, encore un autre groupe fonctionnel, dans des solvants non phénoliques, caractérisées en ce que la $\gamma$-butyrolactone, l'acétophénone, l'ester méthylique ou l'ester éthylique de l'acide benzoïque, l'alcool benzylique ou leurs mélanges ont été utilisés comme solvants non phénoliques.

2. Compositions de revêtement suivant la revendication 1, caractérisées en ce qu'on utilise comme composés porteurs de groupes carboxyle des composés de formule générale II

$$(X)_z\text{—}R^1\text{—}COOH \qquad (II)$$

dans laquelle

$R^1$ est un reste aliphatique, cycloaliphatique, aliphatique-aromatique, hétérocyclique ou aromatique évetuellement substitué, de valence $z + 1$,

$z$ est un nombre entieur de valeur 1—4 et

X est un groupe carboxyle, dérivé d'acide glycinique, hydroxy, amino, carboxy-ester ou anhydride cyclique.

3. Compositions de revêtement suivant la revendication 2, caractérisées en ce que, dans la formule générale II,

$R^1$ est un reste de valence $z + 1$ aliphatique éventuellement substitué en $C_1$—$C_{20}$, cycloaliphatique en $C_5$—$C_{12}$, aliphatique-aromatique en $C_6$—$C_{20}$ ou aromatique en $C_5$—$C_{12}$ ou un reste aryle ou cycloalkyle en $C_5$—$C_{12}$ comportant des hétéro-atomes tels que N et/ou O et/ou S dans la noyau et est égal à 1.

4. Compositions de revêtement suivant les revendications 1—3, caractérisées en ce que les groupes carboxyle ne sont produits que pendant la réaction partiellement ou totalement à partir d'anhydrides cycliques.

5. Compositions de revêtement suivant les revendications 1—4, caractérisées en ce qu'on utilise comme composés porteurs de groupes carboxyle des composés de formule générale

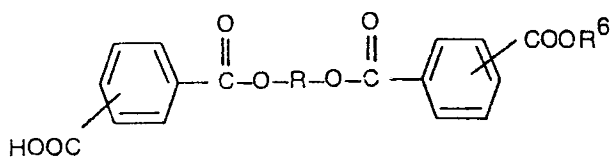

dans laquelle

R est un reste aromatique ou moins divalent en $C_5$ à $C_{12}$, un reste aliphatique saturé ou non saturé en $C_2$ à $C_{20}$, un reste cycloaliphatique en $C_5$ à $C_{12}$, dans lequel des noyaux aromatiques, cycloaliphatiques ou hétérocycliques ainsi que des ponts éther, céto, ester ou sulfone peuvent être contenus, et qui peut être substitué, le cas échéant, par des halogènes, des groupes nitro ou des groupes alkoxy en $C_1$ à $C_{20}$, et

$R^6$ est l'hydrogène ou un reste aliphatique en $C_1$ à $C_{20}$, aliphatique-aromatique en $C_6$ à $C_{20}$ ou aromatique en $C_5$ à $C_{12}$ éventuellement substitué.

6. Compositions de revêtement suivant les revendications 1—4, caractérisées en ce qu'on utilise comme composés porteurs de groupes carboxyle des composés de formule générale

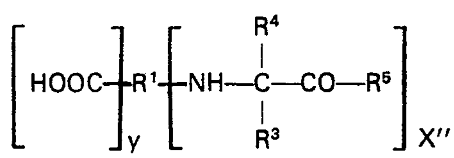

dans laquelle

$R^3$ et $R^4$, identiques ou différents, représentent l'hydrogène, un reste alkyle en $C_1$ à $C_{20}$, un reste aryle en $C_5$ à $C_{12}$ ou un rest aralkyle en $C_6$ à $C_{20}$, $R^5$ est un groupe hydroxyle, un groupe amino, un groupe (alkyle en $C_1$ à $C_{20}$)-amino, di-(alkyle en $C_1$ à $C_{20}$)-amino, alkoxy en $C_1$ à $C_{20}$ ou aroxy en $C_5$ à $C_{12}$ et

$x''$ et y, identiques ou différents, représentent un nombre entier de 1 à 3.

7. Compositions de revêtement suivant les revendications 1—6, caractérisées en ce qu'on utilise, comme composés porteurs de groupes carboxyle, l'acide isophtalique et/ou l'acide trimellitique et/ou l'anhydride d'acide trimellitique et/ou l'acide téréphtalique, ainsi que les isomères, des dérivés d'acide anilino-isobutyrique porteurs de groupes carboxyle, les oligo-esters correspondants de ces acides avec de faibles quantités d'éthylène-glycol, de propylène-glycol, de glycérol, de triméthylolpropane et/ou d'isocyanurate de tris-hydroxyéthyle.

8. Utilisation des compositions de revêtement suivant les revendications 1—7 pour la production de revêtements.

9. Utilisation des compositions de revêtement suivant la revendication 8 pour le vernissage de fils métalliques.